# EUROPEAN PATENT SPECIFICATION

(11) **EP 4 270 738 B1**
(45) Date of publication and mention of the grant of the patent: **25.06.2025**
(21) Application number: 23169128.8
(22) Date of filing: 21.04.2023
(51) Int. Cl.: B60K 7/00, H02K 7/14, H02K 21/22

(54) **WHEEL DEVICE WITH INTEGRATED ELECTRIC MOTOR FOR A MOTOR VEHICLE**
RADVORRICHTUNG MIT INTEGRIERTEM ELEKTROMOTOR FÜR EIN KRAFTFAHRZEUG
DISPOSITIF DE ROUE À MOTEUR ÉLECTRIQUE INTÉGRÉ POUR VÉHICULE AUTOMOBILE

(30) Priority: 27.04.2022 IT 202200008264
(43) Date of publication of application: 01.11.2023
(73) Proprietor: FERRARI S.p.A., 41100 Modena (IT)
(72) Inventor: FAVARETTO, Fabrizio, 41100 MODENA (IT)
(74) Representative: Studio Torta S.p.A.

(56) References cited:
- EP-B1- 0 492 290
- EP-B1- 0 650 644
- EP-B1- 1 252 034
- EP-B1- 3 083 307
- CN-A- 103 112 313
- CN-A- 111 469 644
- CN-A- 113 799 595
- DE-A1- 102008 004 081
- US-A- 4 913 258
- US-A1- 2017 110 933
- US-A1- 2021 070 163

## Description

### TECHNICAL FIELD

The invention relates to a wheel device or more simply to a wheel for a motor vehicle, in particular a sports car.

### PRIOR ART

In the prior art, the idea of integrating an electric motor on a wheel of a motor vehicle has been explored on numerous occasions.

The integration of an electric motor on a wheel renders the use of transmissions superfluous, which renders the motor vehicle more efficient.

Positioning an electric motor in a wheel allows the interior space of the motor vehicle to be increased significantly in favour of passengers and baggage. Moreover, an appropriate suspension system enables a better control of pitch and roll motions during transient events.

On the other hand, the complexity of the wheel increases with an increase in the number of necessary components
together with the related costs.

Examples of complex known wheel devices, which could be difficult to be inspected and efficiently cooled are disclosed in US2021070163A1, CN103112313A, and EP3083307B1.

Therefore, there is a need to provide wheel devices with an integrated electric motor that constitute alternatives to those already known and are more specifically simplified, for example by reducing the number of components and/or mechanical connections, without sacrificing performance, efficiency, or reliability.

Moreover, there is a need to provide wheel devices with an integrated electric motor that allow a simple tyre change or a simple removal of the rim, in particular without necessarily also having to remove the electric motor.

An object of the invention is to satisfy at least one of the needs set forth above, preferably in a simple and cost-effective manner.

### DESCRIPTION OF THE INVENTION

The object is achieved by a wheel device as defined in claim 1.

The dependent claims define particular embodiments of the invention.

### BRIEF DESCRIPTION OF THE DRAWINGS

In the following, an embodiment of the invention is described for a better understanding of the same by way of a non-limiting example and with reference to the accompanying drawings, wherein:
- Figure 1 is a perspective view of a motor vehicle comprising a wheel device according to the invention;

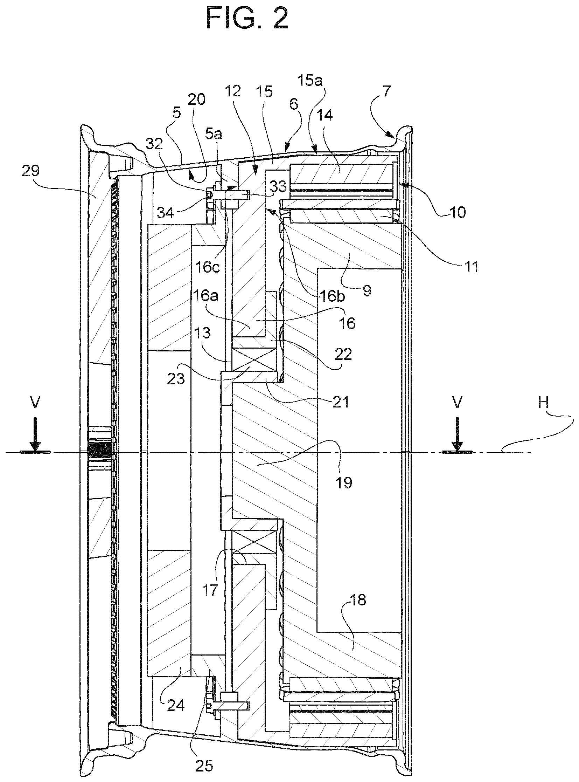

- Figure 2 is a section of the wheel device according to a plane orthogonal to an axis of the wheel device;

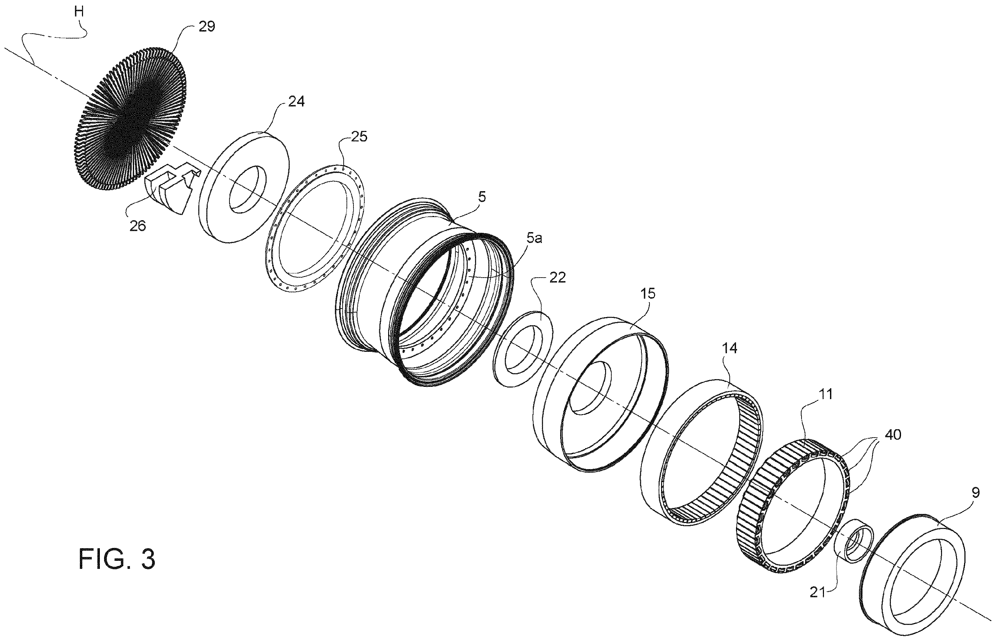

- Figure 3 is an exploded view of the wheel device;

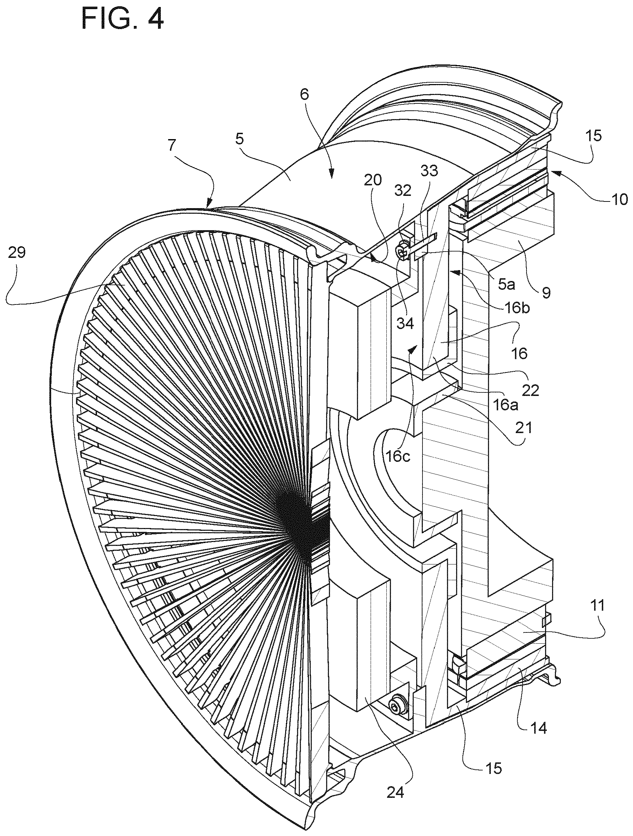

- Figure 4 is a cross-section of the wheel device; and
- Figure 5 is a section of the wheel device according to a sectional plane identified in Figure 2 by the section lines V-V.

### EMBODIMENTS OF THE INVENTION

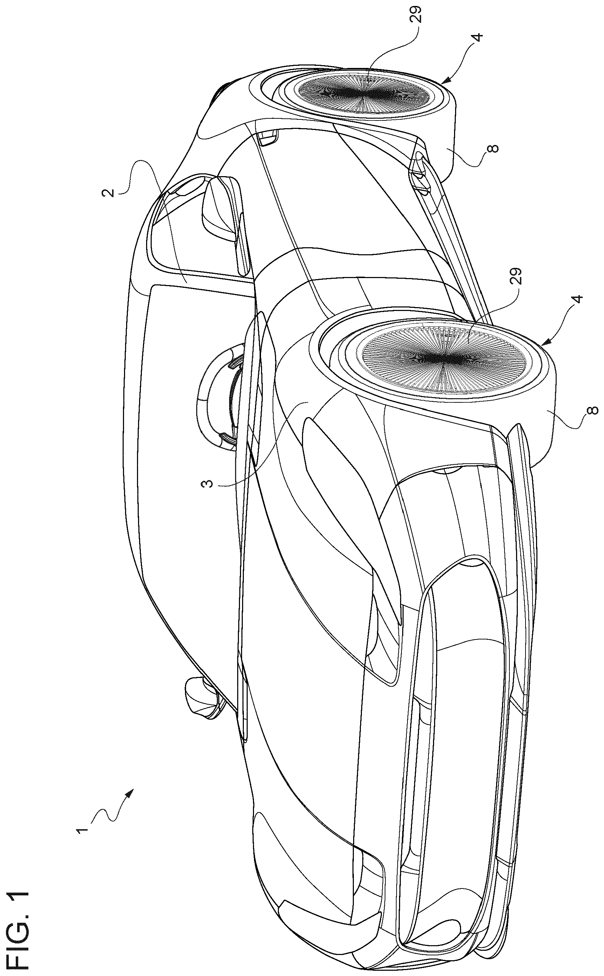

In Figure 1, the reference number 1 is used to indicate, as a whole, a motor vehicle.

The motor vehicle 1 comprises a body 2, which in turn includes a chassis that is not illustrated and a shell 3 carried by the chassis and defining the external surfaces of motor vehicle 1.

Moreover, the motor vehicle 1 comprises a plurality of wheels or wheel devices 4, of which only two are illustrated in Figure 1. The wheels 4 are coupled to the body 2 or more precisely to the chassis via suspensions that are not illustrated.

The wheels 4 define the non-suspended mass of the motor vehicle 1. The suspensions suspend the body 2 or more precisely the chassis relative to the wheels 4, so that the body 2 forms part of the suspended mass of the motor vehicle 1.

The wheels 4 have similar characteristics to one another, with the possible exception of their dimensions, so that only one of the wheels 4 will be described in greater detail, it being understood that the characteristics described for one of the wheels 4 will also be applicable to the others.

The wheel 4 comprises a rim 5 having in particular a tubular geometry. The rim 5 has an axis H, around which the rim 5 extends, thus defining a solid of revolution.

The axis H is transversal to a direction of travel of the motor vehicle 1.

The rim 5 also has an outer surface 6 extending around the axis H, thus defining a surface of revolution.

The outer surface 6 defines a seat or channel 7 configured to receive a tyre 8 of the wheel 4. The tyre 8 is fitted on the rim 5 at the seat 7, in particular according to typical procedures.

In other words, the seat 7 allows the fitting of the tyre 8.

Moreover, the wheel 4 comprises a wheel hub 9, an electric motor 10 with a stator 11 fixed relative to the wheel hub 9 and a rotor 12 fixed relative to the rim 5, and at least one radial bearing 13 supporting the rotor 12 and thus the rim 5 on the wheel hub 9 in a rotary manner around the axis H relative to the wheel hub 9 and consequently to the stator 11.

The wheel hub 9 is arranged around the axis H inside the rim 5. In other words, the wheel hub 9 is coaxial to the rim. The wheel hub 9 is coupled to one of the suspensions of the motor vehicle 1. Consequently, the body 2 is suspended relative to the wheel hub 9 by means of the latter suspension.

The stator 11 is coaxial or arranged coaxially to the wheel hub 9. In particular, the stator 11 is radially outer than the wheel hub 9. More specifically, the stator 11 is fitted directly on the wheel hub 9.

Thus, the wheel hub 9 is or defines a stator support. In practice, the term wheel hub is exchangeable with stator support in this description.

The rotor 12 is configured to interact magnetically with the stator 11, as is normally the case according to the prior art. In fact, the magnetic interaction between the rotor 12 and the stator 11 allows the rotor 12 to rotate relative to the stator 11 around the axis H.

The electric motor 10 in this particular case is an AC motor, more specifically an, in particular brushless, permanent magnet synchronous motor.

More specifically, the rotor 12 comprises a portion 14 coaxial or arranged coaxially to the stator 11 and arranged in a radially outer position relative to the stator 11.

In particular, the stator 11 is at least partially arranged inside the portion 14. In fact, the portion 14 has an annular shape and thus defines a rotor ring around the axis H. The stator 11 is at least partially inside the ring or covered by the ring radially.

The portion 14 or possibly another portion of the rotor 12 comprises one or more permanent magnets or polar pairs configured to generate a magnetic flux, specifically directed radially towards the stator 11 or the axis H.

The stator 11 comprises electric windings 40 configured to generate a magnetic field in response to a flow of electric current through the windings 40. In other words, the electric windings 40 can be connected to an electric power source, such as a car battery of the motor vehicle 1, in order to be supplied with electric current. The supply of electric current causes the generation of the magnetic field.

The magnetic field interacts with the magnetic flux generated by the permanent magnets of the rotor. The magnetic interaction between the magnetic flux and the magnetic field triggers the relative rotation of the rotor 12 relative to the stator 11.

Conversely, as is well known in the technical field of electric motors, should the rotor 12 be brought into rotation by other causes than magnetic interaction, the electric motor 10 could act as an electric generator.

Conveniently, the power supply of the electric windings 40 can be actively controlled by means of a designated control unit of the motor vehicle 1 or of the wheel 4. The behaviour of the electric motor 10 as a motor or generator is thus fully controllable by means of the control unit.

The wheel 4 comprises a flange 5a fixed relative to the rim 5 and arranged inside the rim 5 in a radially projecting manner relative to the rim 5 towards said axis H,

In other words, as can be derived directly and unequivocally from the figures, the flange 5a protrudes radially from the rim 5 towards the axis H.

Moreover, as can be derived directly and unequivocally from the figures, the rim 5 is preferably a single piece, i.e. it does not consist of a plurality of interconnected pieces. This is advantageous in that it renders possible a potential replacement or handling or balancing of the pressurized tyre 8 even after a removal of the rim 5 from the motor 10.

According to the invention, the wheel 4 comprises fixing members 32 to fix the rotor 12 to the flange 5a, so that the flange 5a is fixed to the rotor 12 by means of the fixing members 32. Consequently, the rim 5 is fixed relative to the rotor 12. A rotation of the rotor 12 around the axis H is thus directly transmitted to the rim 5.

In other words, the fixing members 32 fix the flange 5a to the rotor 12, in particular directly.

The fixing members 32 are releasable or detachable, in the sense that the flange 5a can be separated from the rotor 12 by releasing the fixing members 32, without the flange 5a or the rotor 12 suffering any damage that could potentially compromise their operability.

More specifically, the fixing members 32 comprise a plurality of threaded elements 33, such as screws or pins, and corresponding holes on the flange 5a and on the rotor 12 that allow a fixation between the flange 5a and the rotor 12 by means of the threaded elements 33.

In particular the threaded elements 33 and the holes extend parallel to the axis H through the flange 5a and the rotor 12.

The threaded elements 33 and the holes are distributed circumferentially around the axis H.

More specifically, the holes on the flange 5a are through-holes while the corresponding holes on the rotor 12 are, for example, blind.

Moreover, for example, the holes on the flange 5a are plain holes, while the corresponding holes on the rotor 12 are specifically threaded to allow screwing of the threaded elements 33. The screwing into the holes on the rotor 12 through the holes on the flange 5a in turn causes the fixation of the flange 5a to the rotor 12, for example by means of specific heads 34 of the threaded elements 33.

Preferably, the flange 5a protrudes directly from the rim 5. In particular, the flange 5a is made of one piece with the rim 5.

In the illustrated embodiment, the rotor 12 comprises a portion or casing 15 defining a housing accommodating the stator 11 and in particular also the portion 14; the latter is fixed relative to the portion 15 and arranged radially inside the portion 15.

Specifically, the portion 15 has a bell shape.

The portion 15 comprises an outer surface 15a extending around the axis H. The outer surface 15a directly faces an inner surface 20 of the rim 5.

The inner surface 20 faces radially towards the axis H.

Preferably, the outer surface 15a is spaced apart or separated from the inner surface 20. However, this is not strictly necessary; the outer surface 15a could also be in contact with the inner surface 20.

In other words, the rotor 12 or the portion 15 might be in mutual contact with the rim 5.

The rim 5 might comprise a portion arranged in contact with the rotor 12, provided that the latter portion comprises a polymer or elastomer, for example a rubber, in particular a vulcanized rubber, instead of being, for example, entirely made of metal.

In other words, the portion of the rim 5 comprising the polymer or the elastomer would include the inner surface 20.

Thus, the interference or the mutual contact between the rotor 12 and the rim 5 can occur between two respective metal materials (metal-to-metal contact) or between a metal material and a polymer or elastomer (metal-polymer/elastomer contact), or even between materials not entirely made of metal, without losing generality.

The rim 5, as well as the rotor 12, could be made of a single piece or comprise a plurality of portions fixed or attached to one another, without losing generality.

Moreover, in particular, the portion 15 comprises a radial wall 16 extending transversely or more precisely orthogonally to the axis H.

More specifically, the radial wall 16 has a radially inner end 16a arranged in a radially inner position relative to the stator 11.

The end 16a defines an axial hole 17 around the axis H.

Moreover, the radial wall 16 has two faces 16b, 16c transversal or more precisely orthogonal to the axis H and opposite one another according to the axis H.

The face 16b faces the housing defined by the portion 15 or contributes to the definition of said housing, while the face 16c faces the flange 5a. In particular, the face 16c directly faces the flange 5a and is more specifically in contact with it.

The fixing members 32 fix the flange 5a to the rotor 12 at the radial wall 16. Thus, the holes on the rotor 12 of the fixing members 32 are more precisely obtained on the radial wall 16.

The wheel hub 9 comprises a portion 18 arranged inside the housing defined by the portion 15, as well as a portion 19 extending through the axial hole 17 along the axis H.

The stator 11 is carried by the wheel hub 9 at the portion 18. The portion 18 is coaxial to the ring defined by the portion 14 and is arranged radially inside the same ring.

The portion 18 is arranged in an inner radial position relative to the fixing members 32.

Moreover, in particular, the stator 11 is arranged in an inner radial position relative to the fixing members 32.

The radial bearing 13 comprises an inner ring 21, an outer ring 22, and rolling bodies 23 arranged radially between the inner ring 21 and the outer ring 22.

In particular, the rolling bodies 23 are defined by balls, more specifically by two crowns of balls.

Specifically, the radial bearing 13 is an angular contact bearing, so that it supports axial and radial loads. The type of fitting of the radial bearing 13 is not described in detail but can be a fitting with the axes of the balls being incident inside the radial bearing 13 (X fitting) or outside the radial bearing 13 (O fitting).

The outer ring 22 is arranged around the axis H and is fixed relative to the rotor 12. More precisely, the outer ring 22 is fixed to the rotor 12 at the end 16a or at the radial wall 16 inside the axial hole 17.

Thus, the radial bearing 13 supports the radial wall 16 of the rotor 12.

The inner ring 21 is arranged around the axis H and is fixed relative to the wheel hub 9. More precisely, the inner ring 21 is fixed to the wheel hub 9 at the portion 19 inside the axial hole 17.

The inner ring 21 is radially more outward relative to the portion 19, while the outer ring 22 is radially more inward relative to the end 16a or the radial wall 16.

Thus, the outer ring 22 rotates around the axis H relative to the inner ring 21, which is fixed relative to the wheel hub 9.

Here, the wheel hub 9, which is understood as the central or radially innermost element of the wheel 4, is not rotatable about the axis H and is rather more specifically fixed relative to the axis H.

It is thus evident that the wheel hub 9 is the stator support.

The wheel 4 comprises a brake disc 24 carried by the rotor 12, in particular at the radial wall 16, in a fixed position relative to the rotor 12.

The brake disc 24 is fixed to the rotor 12, specifically at the radial wall 16, via the fixing members 32.

The brake disc 24 is arranged outside the housing defined by the portion 15.

Moreover, the brake disc 24 is arranged in a radially inner position relative to the fixing members 32.

The flange 5a is arranged between the rotor 12 and the brake disc 24 according to the axis H.

In other words, the brake disc 24 and the rotor 12 are arranged on opposite sides of the flange 5a according to the axis H.

In still other words, the brake disc 24 is axially outer than the flange 5a and to the rotor 12. The term axially outer is understood with reference to the motor vehicle 1 and to the axis H.

Thus, the brake disc 24 faces towards the outside of the motor vehicle 1 according to the axis H and is arranged in front of the flange 5a and the rotor 12 or downstream of the flange 5a and the rotor 12, moving from the interior towards the exterior of the motor vehicle 1 according to the axis H.

Thus, to summarize, the fixing members 32 fix both the brake disc 24 and the rotor 12 to the flange 5a in respective positions so that the flange 5a is arranged axially (i.e. according to the axis H) between the rotor 12 and the brake disc 24, i.e. so that the brake disc 24 is axially outer than the flange 5a and to the rotor 12, with the flange 5a axially outer than the rotor 12.

Specifically, the wheel 4 comprises a spacer plate 25 arranged axially between the rotor 12 and the brake disc 24. The spacer plate 25 is fixed to both the rotor 12 and the brake disc 24.

Clearly, as can be derived from the figures, the spacer plate 25 keeps the brake disc 24 axially at a distance from the flange 5a and from the rotor 12.

In particular, the fixing members 32 fix the spacer plate 25 to the flange 5a, more specifically directly. In fact, the fixing members 32 comprise corresponding holes on the spacer plate 25 which the fixing members 33 pass through.

In other words, the flange 5a is sandwiched between the spacer plate 25 and the radial wall 16 or the rotor 12.

Thus, in particular, the brake disc 24 is fixed relative to the rotor 12, also axially.

As can also be derived from the figures, the fixing members 32 fix together, in a releasable manner, the brake disc 24, the rotor 12, and the flange 5a belonging to a portion of the rim 5, where the portion is made of a single piece, so that the fixing members 32 pass through a single piece of the rim 5 and, at the same time, the spacer plate 25 or directly the brake disc 24, in cases where the spacer plate 25 is absent, or more generally a support fixed relative to the brake disc 24 and supporting the brake disc 24.

The fixing elements 32 only pass through the single piece, i.e. they do not pass through separate, interconnected portions of the rim 5.

Moreover, preferably, the wheel 4 comprises a brake calliper device 26. The device 26 is configured to co-operate in contact with the brake disc 24 in a selective manner. In other words, the device 26 can be controlled to grasp the brake disc 24, thus exerting a braking action on the rotor 12 by sliding friction, and to release the brake disc 24, thus ceasing to exert the braking action.

Thus, the device 26 and the brake disc 24 form part of a braking device of the wheel 4. Here, in this particular case, the braking device is suitable for emergency use or to provide a parking brake or for use as an auxiliary braking device.

In fact, the electric motor 10 can be employed as a brake when it operates as an electric generator.

The device 26 is carried by the wheel hub 9. In other words, the device 26 has at least one element 27 that is fixed relative to the wheel hub 9.

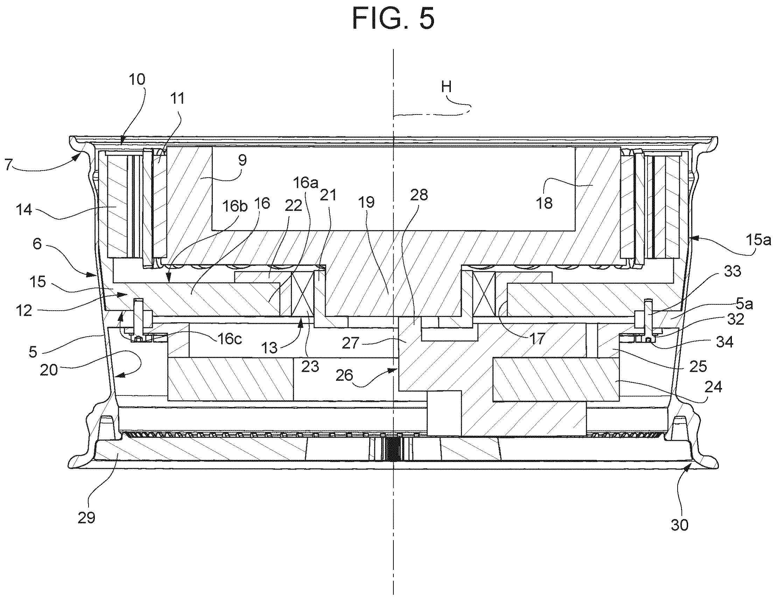

In particular, the device 26 comprises at least one portion 28 (Figure 5) extending inside the inner ring 21.

Conveniently, the wheel 4 comprises a cover 29 fixed to the front of the rim 5, for example by means of a form-fit coupling or via threaded means.

The cover 29 is fixed to the rim 5 in a releasable or detachable manner, in the sense that the separation of the cover 29 from the rim 5 can occur without causing damage to the cover 29 or to the rim 5.

In other words, the cover 29 is optional and removable.

The flange 5a is arranged between the rotor 12 or the radial wall 16 and the cover 29.

An empty volume or chamber is provided between the cover 29 and the flange 5a or more precisely the fixing members 32, so that the fixing members 32 are accessible to an operator from outside the rim once the cover 29 has been removed.

Thus, the cover 29 covers an opening 30 (Figure 5) of the rim 5; the opening 30 is defined by the rim 5 transversely or more precisely orthogonally to the axis H.

The fixing members 32 are accessible by an operator via the opening 30 through the empty volume or chamber. In other words, the fixing members 32 are in communication with the opening 30.

Implicitly, also the brake disc 24 is in communication with the opening 30. Moreover, the brake disc 24 is accessible by the operator via the opening 30 and is located in the empty volume or chamber.

Preferably, the wheel 4 comprises one or more sensors coupled to the rotor 12 or more precisely to the portion 15 and configured to detect one or more quantities indicative of a force and/or a moment acting on the rim 5 and consequently on the rotor 12.

The force or the moment can have a plurality of force or moment components in three-dimensional space, so that the quantities can be respectively indicative of force or moment components.

For example, the sensors can be strain gauges fixed, in particular directly fixed, to the rotor 12 or more precisely to the portion 15.

The advantages of the wheel 4 according to the invention are evident from the foregoing.

The wheel 4 integrates an electric motor 10 in a simple, effective and efficient manner.

The rotor 12 is integral with the rim 5 via the fixation of the flange 5a to the rotor 12; this type of fixation makes it possible not to use gearmotors.

The wheel 4 is thus readily manufacturable and reliable.

Moreover, the fixation is readily releasable without involving the removal of the electric motor 10. It is thus possible to separate the electric motor 10 from the rim 5. This makes it possible to change the tyre 8, for example, in a very simple manner.

The flange 5a is located outside the housing defined by the portion 15, so that access to the fixing members 32 is convenient for the operator.

Moreover, the sensors would allow the direct acquisition of information directly indicative of the force and/or moment acting on the rim 5 and useful for controlling the dynamics of the motor vehicle 1. These sensors are more accurate and sensitive than estimates based on indirect measurements of the force and/or moment acting on the rim 5.

Finally, it is clear that the wheel 4 according to the invention can be modified and varied without, however, departing from the scope of protection defined by the claims.

In particular, each of the details included in the figures is independent of the other details and is specifically conceived to resolve specific technical issues in isolation from the other details.

In particular, the details mentioned include each of the arrangements of the various components illustrated in relation to the other components.

More specifically, the illustrated shapes and dimensions are merely illustrative and are not inextricably linked to the arrangement of the components.

## Claims

1. A wheel device (4) for a motor vehicle (1), the device (4) comprising:
- a rim (5) having an axis (H) and an outer surface (6) defining a seat (7) for fitting a tyre (8),
- a wheel hub (9) arranged around the axis (H) inside the rim (5) and suited to be coupled to a suspension of the motor vehicle (1),
- an electric motor (10) comprising a stator (11) arranged coaxially to the wheel hub (9) in a fixed position relative to the wheel hub (9) and a rotor (12) configured to magnetically interact with the stator (11),
- a radial bearing (13) supporting the rotor (12) in a rotary manner around said axis (H) relative to the wheel hub (9) and to the stator (11), and
- a flange (5a) fixed relative to the rim (5) and arranged inside the rim (5) in a radially projecting manner relative to the rim (5) towards said axis (H),
the device further comprising releasable fixing means to fix the rotor (12) to the flange (5a), so that the flange (5a) is fixed to the rotor (12) by means of said releasable fixing means, and a brake disc (24) fixed to the rotor (12) by means of said releasable fixing means, **characterized in that** the flange (5a) is arranged between the rotor (12) and the brake disc (24) according to said axis (H).

2. The wheel device according to claim 1, wherein the rotor (12) comprises at least one first rotor portion (14, 15) arranged coaxially to the stator (11) in a radially outer position relative to the stator (11).

3. The wheel device according to claim 1 or 2, wherein the radial bearing (13) comprises an outer ring (22) arranged around said axis (H) and fixed relative to the rotor (12).

4. The wheel device according to any one of the preceding claims, wherein the radial bearing (13) comprises an inner ring (21) arranged around said axis (H) and fixed relative to the wheel hub (9).

5. The wheel device according to claim 4, further comprising a brake caliper device (26) carried by the wheel hub (9) and having at least one portion (28) extending inside the inner ring (21) of the radial bearing (13).

6. The wheel device according to any one of the preceding claims, wherein the rotor (12) comprises a second rotor portion (14) comprising one or more permanent magnets configured to generate a magnetic flux, the stator (11) comprising electric windings (40) configured to generate a magnetic field interacting with said magnetic flux in response to a flow of electric current through the windings (40).

7. The wheel device according to claim 6, wherein said magnetic flux is radially directed towards the stator (11).

8. The wheel device according to any one of the preceding claims, wherein the rotor (12) comprises a third rotor portion (14) defining a rotor ring around said axis (H), the stator (11) comprising a stator portion (18) coaxial to the rotor ring and radially arranged inside the rotor ring.

9. The wheel device according to any one of the preceding claims, wherein the rotor (12) comprises an outer casing (15) defining a housing accommodating the stator (11).

10. The wheel device according to claim 9, wherein the outer casing (15) comprises a radial wall (16) extending transversally to said axis (H) and having a first face (16b) and a second face (16c) transversal relative to said axis (H) and opposite one another according to said axis (H), wherein the first face (16b) faces the housing, and wherein the second face (16c) faces the flange (5a), the flange (5a) being fixed to the rotor (12) at the radial wall (16).

11. The wheel device according to claim 9 or 10, wherein the outer casing (15) has an outer surface (15a) extending around said axis (H) and directly facing an inner surface (20) of the rim (5).

12. The wheel device according to any one of the preceding claims, wherein the flange (5a) directly projects from the rim (5) .

13. The wheel device according to any one of the preceding claims, further comprising one or more sensors coupled to the rotor (12) and configured to detect one or more quantities indicative of a force or moment acting upon the rim (5) or the rotor (12).

## Patentansprüche

1. Radvorrichtung (4) für ein Kraftfahrzeug (1), wobei die Vorrichtung (4) aufweist:
eine Felge (5) mit einer Achse (H) und einer Außenfläche (6), die einen Sitz (7) zum Montieren eines Reifens (8) definiert;
eine Radnabe (9), die um die Achse (H) herum innerhalb der Felge (5) angeordnet und dazu geeignet ist, mit einer Aufhängung des Kraftfahrzeugs (1) verbunden zu werden;
einen Elektromotor (10) mit einem Stator (11), der koaxial zur Radnabe (9) in einer festen Position relativ zur Radnabe (9) angeordnet ist, und einem Rotor (12), der dafür konfiguriert ist, magnetisch mit dem Stator (11) zu wechselwirken;
ein Radiallager (13), das den Rotor (12) auf eine rotierende Weise um die Achse (H) relativ zur Radnabe (9) und zum Stator (11) drehbar lagert; und
einen Flansch (5a), der relativ zur Felge (5) fixiert ist und innerhalb der Felge (5) auf eine radial hervorstehende Weise relativ zur Felge (5) in Richtung zur Achse (H) angeordnet ist,
wobei die Vorrichtung ferner lösbare Befestigungseinrichtungen zum Befestigen des Rotors (12) am Flansch (5a), so dass der Flansch (5a) mittels der lösbaren Befestigungseinrichtungen am Rotor (12) befestigt ist, und eine Bremsscheibe (24) aufweist, die mittels der lösbaren Befestigungseinrichtungen am Rotor (12) befestigt ist,
**dadurch gekennzeichnet, dass**
der Flansch (5a) entlang der Achse (H) zwischen dem Rotor (12) und der Bremsscheibe (24) angeordnet ist.

2. Radvorrichtung nach Anspruch 1, wobei der Rotor (12) mindestens einen ersten Rotorabschnitt (14, 15) aufweist, der koaxial zum Stator (11) in einer radial äußeren Position relativ zum Stator (11) angeordnet ist.

3. Radvorrichtung nach Anspruch 1 oder 2, wobei das Radiallager (13) einen Außenlaufring (22) aufweist, der um die Achse (H) herum angeordnet und relativ zum Rotor (12) fixiert ist.

4. Radvorrichtung nach einem der vorstehenden Ansprüche, wobei das Radiallager (13) einen Innenlaufring (21) aufweist, der um die Achse (H) herum angeordnet und relativ zur Radnabe (9) fixiert ist.

5. Radvorrichtung nach Anspruch 4, ferner mit einer Bremssattelvorrichtung (26), die durch die Radnabe (9) getragen wird und mindestens einen sich innerhalb des Innenlaufrings (21) des Radiallagers (13) erstreckenden Abschnitt (28) aufweist.

6. Radvorrichtung nach einem der vorangehenden Ansprüche, wobei der Rotor (12) einen zweiten Rotorabschnitt (14) mit einem oder mehreren Permanentmagneten aufweist, die dafür konfiguriert sind, einen Magnetfluss zu erzeugen, wobei der Stator (11) elektrische Wicklungen (40) aufweist, die dafür konfiguriert sind, ein Magnetfeld zu erzeugen, das in Antwort auf einen elektrischen Stromfluss durch die Wicklungen (40) mit dem Magnetfluss wechselwirkt.

7. Radvorrichtung nach Anspruch 6, wobei der Magnetfluss radial in Richtung zum Stator (11) gerichtet ist.

8. Radvorrichtung nach einem der vorangehenden Ansprüche, wobei der Rotor (12) einen dritten Rotorabschnitt (14) aufweist, der einen Rotorring um die Achse (H) herum definiert, wobei der Stator (11) einen koaxial zum Rotorring und radial innerhalb des Rotorrings angeordneten Statorabschnitt (18) aufweist.

9. Radvorrichtung nach einem der vorangehenden Ansprüche, wobei der Rotor (12) ein Außengehäuse (15) aufweist, das eine Einhausung definiert, die den Stator (11) aufnimmt.

10. Radvorrichtung nach Anspruch 9, wobei das Außengehäuse (15) eine radiale Wand (16) aufweist, die sich quer zur Achse (H) erstreckt und eine erste Fläche (16b) und eine zweite Fläche (16c) aufweist, die quer zur Achse (H) und einander gegenüberliegend entlang der Achse (H) angeordnet sind, wobei die erste Fläche (16b) der Einhausung zugewandt ist, und wobei die zweite Fläche (16c) dem Flansch (5a) zugewandt ist, wobei der Flansch (5a) an der radialen Wand (16) am Rotor (12) fixiert ist.

11. Radvorrichtung nach Anspruch 9 oder 10, wobei das Außengehäuse (15) eine Außenfläche (15a) aufweist, die sich um die Achse (H) herum erstreckt und direkt einer Innenfläche (20) der Felge (5) zugewandt ist.

12. Radvorrichtung nach einem der vorangehenden Ansprüche, wobei der Flansch (5a) direkt von der Felge (5) hervorsteht.

13. Radvorrichtung nach einem der vorangehenden Ansprüche, ferner mit einem oder mehrere Sensoren, die mit dem Rotor (12) verbunden und dafür konfiguriert sind, eine oder mehrere Größen zu erfassen, die eine auf die Felge (5) oder den Rotor (12) wirkende Kraft oder ein auf diese wirkendes Moment anzeigen.

## Revendications

1. Dispositif de roue (4) pour un véhicule à moteur (1), le dispositif (4) comprenant :
- une jante (5) présentant un axe (H) et une surface externe (6) définissant un siège (7) pour le montage d'un pneu (8),
- un moyeu de roue (9) agencé autour de l'axe (H) à l'intérieur de la jante (5) et convenant pour être couplé à une suspension du véhicule à moteur (1),
- un moteur électrique (10) comprenant un stator (11) agencé coaxialement au moyeu de roue (9) dans une position fixe par rapport au moyeu de roue (9) et un rotor (12) configuré pour interagir magnétiquement avec le stator (11),
- un palier radial (13) supportant le rotor (12) de manière rotative autour dudit axe (H) par rapport au moyeu de roue (9) et au stator (11), et
- une joue (5a) fixe par rapport à la jante (5) et disposée à l'intérieur de la jante (5) de manière radialement saillante par rapport à la jante (5) vers ledit axe (H),
le dispositif comprenant en outre des moyens de fixation détachables pour fixer le rotor (12) à la joue (5a), de sorte que la joue (5a) soit fixée au rotor (12) au moyen desdits moyens de fixation détachables, et un disque de frein (24) fixé au rotor (12) au moyen desdits moyens de fixation détachables, **caractérisé en ce que** la joue (5a) est agencée entre le rotor (12) et le disque de frein (24) selon ledit axe (H).

2. Dispositif de roue selon la revendication 1, dans lequel le rotor (12) comprend au moins une première portion de rotor (14, 15) agencée coaxialement par rapport au stator (11) dans une position radialement externe par rapport au stator (11).

3. Dispositif de roue selon la revendication 1 ou 2, dans lequel le palier radial (13) comprend une bague externe (22) agencée autour dudit axe (H) et fixe par rapport au rotor (12).

4. Dispositif de roue selon l'une quelconque des revendications précédentes, dans lequel le palier radial (13) comprend une bague interne (21) agencée autour dudit axe (H) et fixe par rapport au moyeu de roue (9).

5. Dispositif de roue selon la revendication 4, comprenant en outre un dispositif d'étrier de frein (26) porté par le moyeu de roue (9) et présentant au moins une portion (28) s'étendant à l'intérieur de la bague interne (21) du palier radial (13).

6. Dispositif de roue selon l'une quelconque des revendications précédentes, dans lequel le rotor (12) comprend une deuxième portion de rotor (14) comprenant un ou plusieurs aimants permanents configurés pour générer un flux magnétique, le stator (11) comprenant des enroulements électriques (40) configurés pour générer un champ magnétique interagissant avec ledit flux magnétique en réponse à une circulation de courant électrique à travers les enroulements (40).

7. Dispositif de roue selon la revendication 6, dans lequel ledit flux magnétique est dirigé radialement vers le stator (11).

8. Dispositif de roue selon l'une quelconque des revendications précédentes, dans lequel le rotor (12) comprend une troisième portion de rotor (14) définissant une bague de rotor autour dudit axe (H), le stator (11) comprenant une portion de stator (18) coaxiale à la bague de rotor et agencée radialement à l'intérieur de la bague de rotor.

9. Dispositif de roue selon l'une quelconque des revendications précédentes, dans lequel le rotor (12) comprend un carter extérieur (15) définissant un logement accueillant le stator (11).

10. Dispositif de roue selon la revendication 9, dans lequel le carter extérieur (15) comprend une paroi radiale (16) s'étendant transversalement audit axe (H) et ayant une première face (16b) et une deuxième face (16c) transversales par rapport audit axe (H) et opposées l'une à l'autre selon ledit axe (H), dans lequel la première face (16b) est en vis-à-vis du logement, et dans lequel la deuxième face (16c) est en vis-à-vis de la joue (5a), la joue (5a) étant fixée au rotor (12) au niveau de la paroi radiale (16).

11. Dispositif de roue selon la revendication 9 ou 10, dans lequel le carter extérieur (15) présente une surface externe (15a) s'étendant autour dudit axe (H) et directement en vis-à-vis d'une surface interne (20) de la jante (5).

12. Dispositif de roue selon l'une quelconque des revendications précédentes, dans lequel la joue (5a) dépasse directement de la jante (5).

13. Dispositif de roue selon l'une quelconque des revendications précédentes, comprenant en outre un ou plusieurs capteurs couplés au rotor (12) et configurés pour détecter une ou plusieurs grandeurs indicatives d'une force ou d'un moment agissant sur la jante (5) ou le rotor (12).
